# FASCICULE DE BREVET EUROPEEN

(11) **EP 2 169 299 B1**
(45) Date de publication et mention de la délivrance du brevet: **24.01.2018**
(21) Numéro de dépôt: 09171704.1
(22) Date de dépôt: 29.09.2009
(51) Int. Cl.: F21V 14/08, F21S 8/12, F21W 101/10

(54) **Module optique pour véhicule automobile apte à éclairer sélectivement une zone**
Optisches Modul für ein Kraftfahrzeug, das selektiv eine Zone beleuchten kann
Optical module for an automobile vehicle capable of selectively lighting an area

(30) Priorité: 30.09.2008 FR 0805409
(43) Date de publication de la demande: 31.03.2010
(60) Demande divisionnaire: 16156636.9
(73) Titulaire: Valeo Vision, 93012 Bobigny Cedex (FR)
(72) Inventeur: Albou, Pierre, 75013, Paris (FR); Blandin, Jonathan, 93320, Les Pavillons Sous Bois (FR); Bourdin, David, 93190, Livry Gargan (FR); Le Bars, Jean-François, 89275, Elchingen (DE); Wiegand, Boris, 78467, Konstanz (DE)

(56) Documents cités:
- EP-A- 1 584 862
- EP-A- 1 806 531
- EP-A- 1 818 602
- WO-A-2008/037388
- DE-A1-102004 033 737
- US-A1- 2005 201 117
- US-A1- 2007 217 194

## Description

L'invention est du domaine des dispositifs d'éclairage, et plus particulièrement du domaine des projecteurs automobiles comportant un ou plusieurs modules optiques, chaque module optique comportant au moins une source lumineuse associée à des éléments optiques afin d'émettre un ou plusieurs types de faisceaux lumineux.. Elle a pour objet un projecteur comportant au moins un module optique, qui est apte à éclairer sélectivement une zone au moyen d'un organe de coupure d'un faisceau lumineux émis par ledit module. Le projecteur de la présente invention est plus particulièrement apte à optimiser l'éclairage d'une zone excluant un espace mouvant dans lequel est localisé un véhicule roulant dont le conducteur ne doit pas être ébloui.

Les projecteurs pour véhicule automobile sont composés dans leur généralité d'un boîtier qui est fermé par une glace transparente à travers laquelle sont émis un ou plusieurs faisceaux lumineux. Ce boîtier loge au moins un module d'éclairage, comprenant principalement une source lumineuse et un système optique apte à modifier au moins un paramètre de la lumière générée par la source lumineuse pour l'émission du faisceaux lumineux par le module d'éclairage. Le système optique comprend des composants optiques qui sont par exemple constitués d'un réflecteur, d'une lentille, d'un élément diffusant ou d'un collimateur, ou tout autre composant optique apte à modifier au moins l'un des paramètres de la lumière générée par la source lumineuse, tel que sa réflexion moyenne et/ou sa direction. Le ou les modules d'éclairage sont susceptibles d'être conjointement logés à l'intérieur d'un même module optique ou d'être répartis dans des projecteurs/ dispositifs optiques qui leurs sont spécifiquement dédiés.

Parmi les module optiques pour projecteur automobile, on connaît ceux dits bi-fonction qui sont agencés pour émettre à partir d'un même module d'éclairage alternativement deux types de faisceaux lumineux selon les conditions d'éclairage requises. L'un de ces faisceaux lumineux est, par exemple, un faisceau code, à courte portée, pour éclairer la voie en évitant d'éblouir un autre conducteur circulant sur une voie à sens de circulation inverse ou sur une voie à même sens de circulation, dans le cas d'un véhicule suivi ou en cours de dépassement par exemple. L'autre des faisceaux lumineux est, par exemple, un faisceau route, à longue portée, permettant d'optimiser l'éclairage fourni par le projecteur en l'absence d'un conducteur à ne pas éblouir. Pour le passage de l'un à l'autre du faisceau code et du faisceau de route, le module optique est équipé d'un cache , monté mobile à l'intérieur du boîtier du module optique, en étant notamment interposé entre la source lumineuse et un composant du système optique, tel qu'une lentille ou analogue. Ce cache mobile est un cache à coupure de faisceau qui autorise l'émission du faisceau code à partir d'un masquage partiel du faisceau lumineux émis par le module optique, qui autrement se propagerait au dessus de la coupure formée par le cache mobile. Une autre fonction accessoire connue réside dans un relevage du faisceau code, pour l'émission d'un faisceau d'autoroute de portée intermédiaire entre celle du faisceau code et celle du faisceau de route.

Selon une forme simple de réalisation, la mobilité du cache permet le passage entre deux positions, l'une d'occultation partielle du faisceau lumineux émis par le module optique pour l'obtention du faisceau code, l'autre d'escamotage dans laquelle le faisceau lumineux émis par le module optique n'est pas masqué pour l'obtention du faisceau de route. Il a aussi été proposé des formes plus complexes de réalisation du cache mobile, qui permettent diverses phases d'occultation du faisceau lumineux émis par le module optique. Plus particulièrement, l'occultation ou non du faisceau lumineux peut être réalisée progressivement en différentes étapes successives. Le cache mobile est par exemple organisé en arbre tournant dont la surface extérieure est sous forme d'une enveloppe de surface continue. On pourra par exemple se reporter au document EP- 0 935 728 pour ce type de cache.

Un inconvénient de ce type de cache mobile formé d'un arbre à géométrie variable réside dans la complexité de sa structure et de ses moyens de mise en rotation. La précision imposée par la variation de géométrie du tambour rend sa réalisation coûteuse, ce qui est à éviter. Une contrainte supplémentaire réside dans la nécessité que la position par défaut du cache mobile doit correspondre à celle du faisceau code, avec en conséquence un agencement du cache mobile et de ses moyens de mobilité qui doit prendre en compte cette contrainte. Le montage de l'arbre tournant à l'intérieur du boîtier, et son positionnement par rapport aux axes optiques du module d'éclairage doivent être rigoureux, avec pour conséquence un accroissement de la complexité du module d'éclairage. Il en ressort que l'organisation générale et les modalités de fonctionnement d'un tel cache mobile proposant diverses phases d'occultation du faisceau lumineux émis par un module optique entre l'émission d'un faisceau code et l'émission d'un faisceau de route, voire encore d'un faisceau d'autoroute, peuvent encore être améliorées.

Il est connu d'exploiter des moyens de détection de l'environnement d'un véhicule pour faire varier automatiquement les faisceaux lumineux émis par les modules optiques équipant le projecteur. De tels moyens de détection permettent notamment de manoeuvrer automatiquement le cache mobile d'un module optique bi-fonction pour l'émission du faisceau code ou du faisceau de route selon les conditions du trafic, et notamment en cas de présence d'un autre véhicule dont le conducteur ne doit pas être ébloui. Les moyens de détection sont notamment du type optoélectronique, tels qu'une caméra ou équipement analogue, et/ou du type à communication par ondes, tels que des moyens communication satellitaire et/ou cellulaire, ou encore du type radars. Divers moyens de calculs peuvent être associés aux moyens de détection pour corriger les informations qu'ils fournissent et parfaire les informations de détection de l'environnement du véhicule.

Il est encore connu d'améliorer le confort du conducteur en vision de nuit, en adaptant selon les besoins la portée et/ou l'intensité des faisceaux de croisement ou des faisceaux de route pour optimiser l'éclairage potentiel de la voie de circulation. Par exemple, il a été proposé une fonction dite faisceau d'autoroute (Motorway Light en anglais) et une fonction dite faisceau de ville (Town Light en anglais). Ces fonctions consistent à modifier la portée et/ou l'intensité lumineuse courante des faisceaux de croisement, selon la voie de circulation empruntée par le véhicule et/ou selon les conditions d'éclairage de l'environnement extérieur du véhicule. Plus particulièrement, lorsqu'un véhicule circule sur une voie à circulation rapide, telle qu'une autoroute ou voie de circulation analogue, il est opportun d'accroître la portée des faisceaux de croisement, pour faire porter efficacement au plus loin le faisceau lumineux émis (fonction faisceau d'autoroute). A contrario, il est opportun de diminuer légèrement la portée et d'élargir les faisceaux émis par les faisceaux de croisement lorsque le véhicule circule à proximité en environnement extérieurement éclairé, tel qu'en milieu urbain par exemple (fonction faisceau de ville). On pourra par exemple se reporter au brevet EP-1 923 262, qui expose des modalités permettant d'adapter la portée d'un faisceau émis par un faisceau code.

D'autres fonctions ont été proposées pour modifier les caractéristiques d'un faisceau lumineux émis par un module optique selon la configuration de la voie de circulation. Par exemple, il est connu la fonction dite faisceau tournant (BL pour Bending Light en anglais) qui peut se décomposer en une fonction dite lumière virage mobile (fonction dite DBL, pour Dynamic Bending Light en anglais) et une fonction dite lumière virage fixe (fonction dite FBL, pour Fixed Bending Light en anglais). La fonction faisceau tournant permet de modifier l'orientation d'un faisceau lumineux, dans le cas du DBL, ou d'ajouter de la lumière latéralement en allumant une ou plusieurs sources lumineuses supplémentaires dans les virages, dans le cas du FBL, de sorte que lorsque le véhicule aborde un virage, la route soit mieux éclairée.

Cependant, l'optimisation de l'éclairage fourni par les projecteurs du véhicule est limitée par les différentes réglementations relatives à la circulation des véhicules sur voie publique, notamment en ce qui concerne l'interdiction d'éblouir les autres usagers des voies de circulation automobile, que ceux-ci circulent sur une voie à sens de circulation inverse ou sur une voie suivant un même sens de circulation. Il en ressort que l'effort des concepteurs dans le domaine se porte sur la recherche de dispositifs d'éclairage pour véhicule automobile qui offrent un compromis entre un éclairage amélioré pour le conducteur, avec un meilleur confort visuel, qui néanmoins n'induit aucune gêne pour les autres usagers de la route. Il a par exemple été suggéré, dans la demande de brevet DE- 102006043281, d'utiliser un cache mobile du type de celui décrit dans la demande de brevet EP- 0 935 728 pour obtenir un tel résultat en définissant diverses zones de coupure de faisceau obtenues à partir de l'arbre tournant à géométrie variable.
Le document WO2008/037388 décrit un projecteur comportant des caches mobiles en translation pour réaliser différents types de coupure.
Le but de la présente invention est de proposer un dispositif d'éclairage ou projecteur pour véhicule automobile, qui est apte à éclairer sélectivement une zone au moyen d'un organe de coupure d'un faisceau lumineux émis par ledit dispositif. Il est plus particulièrement recherché par la présente invention d'améliorer l'éclairage d'une zone excluant un espace mouvant dans lequel est localisé un autre véhicule roulant dont le conducteur ne doit pas être ébloui, cet autre véhicule circulant indifféremment sur une voie en sens inverse ou étant un véhicule suivi. De préférence, le projecteur, et notamment l'organisation des module optiques qu'il contient, sont recherchés d'une structure la plus simple possible, en garantissant notamment une mise en position par défaut correspondante à celle du faisceau code. Notamment, il est visé par la présente invention de proposer un cache mobile de structure simple et aisée à réaliser, et/ou dont les modalités de mobilité et de montage à l'intérieur d'un boîtier de module optique sont structurellement simples et faciles à mettre en oeuvre.

L'invention a pour objet un projecteur pour véhicule automobile, ce projecteur comprenant au moins un module optique apte à émettre plusieurs faisceaux lumineux, dont un faisceau code et au moins un faisceau lumineux supplémentaire, le module optique étant logé à l'intérieur d'un boîtier du projecteur et associant une source lumineuse et un système optique, le module optique étant équipé d'un cache mobile entre au moins deux positions, ce cache mobile étant agencé selon un axe monté tournant dans le module optique et entraîné en rotation au moins par un moteur, ledit cache comportant plusieurs profils de coupure de faisceau lumineux émis par ledit module. Cet axe tournant comporte au moins un premier organe de coupure agencé en cache à double bord permettant d'obtenir une coupure oblique pour l'émission du faisceau code, et au moins un deuxième organe de coupure agencé en muret, de préférence de hauteur sensiblement constante, angulairement décalé par rapport au premier organe de coupure et permettant d'obtenir au moins une ligne de coupure sensiblement verticale pour l'émission d'un faisceau de route qui correspond à un premier faisceau lumineux supplémentaire.

Selon l'invention, le muret est un organe de coupure dont le bord sensiblement vertical permet l'obtention d'une ligne de coupure d'amplitude verticale, pour l'émission d'un faisceau de route à amplitude latérale restreinte, qui constitue de fait ledit premier faisceau lumineux supplémentaire.

Selon un premier mode de réalisation, en positions respectives de coupure, les parties supérieures des organes de coupure de l'axe tournant sont sensiblement positionnées à la même hauteur. Les deux types de faisceau ont ainsi des zones de coupure inférieures, correspondant à ces bords supérieurs, qui sont alignées ou sensiblement alignées.

Selon un second mode de réalisation, en positions respectives de coupure, les parties supérieures des organes de coupure de l'axe tournant sont positionnés à des hauteurs différentes. Dans ce cas, les zones de coupure inférieures ne sont plus alignées.

Ce positionnement relatif en hauteur entre les bords/parties supérieures des organes de coupure peut s'ajuster par la sélection de la hauteur du muret et/ou à l'aide du système de correction équipant le module optique.

De préférence, le muret est focalisé sensiblement sur l'axe optique du module d'éclairage. La coupure correspondant à son bord supérieur est choisie de préférence d'une hauteur d'au moins 0,5 mm ou d'au moins 0,6 mm, notamment d'au moins 0,54 mm, avec une lentille de focale de l'ordre de 43 mm.

L'axe tournant peut être manoeuvré en rotation vers une position correspondante à l'émission d'un deuxième faisceau supplémentaire, qui est soit un faisceau de route, soit un faisceau d'autoroute.

La position de l'axe tournant correspondante à l'émission du faisceau code est une position intermédiaire entre les positions de l'axe tournant correspondantes respectivement à l'émission du premier faisceau lumineux supplémentaire et à l'émission du deuxième faisceau lumineux supplémentaire.

L'entraînement en rotation de l'axe tournant pour le passage de l'une à l'autre des positions affectées à l'émission de l'un ou l'autre des faisceaux lumineux supplémentaires peut être réalisé à partir de la position de référence correspondante à l'émission du faisceau code, et par entraînement en rotation de l'axe tournant suivant des sens respectifs jusqu'à atteindre la position d'émission du faisceau lumineux supplémentaire correspondant, ces positions étant des positions stables maintenues à partir d'une mise en butée de l'axe tournant à l'encontre de son entraînement en rotation par le moteur.

Le moteur d'entraînement en rotation de l'axe tournant peut être un moteur à courant continu, provoquant le passage de la position d'émission du faisceau code vers l'une quelconque des autres positions d'émission de faisceaux lumineux supplémentaires par le module optique.

Le passage entre l'une quelconque des positions de l'axe tournant correspondantes à un faisceau lumineux supplémentaire vers la position correspondante au faisceau code peut être provoqué par un organe élastique de rappel, notamment consécutivement à une modification du pilotage de la commande électrique du moteur.

L'entraînement en rotation de l'axe tournant vers l'une quelconque de ses positions d'émission d'un faisceau lumineux dédié est associé à des moyens de détection de l'environnement du véhicule et à un mécanisme à faisceau tournant et/ou à un mécanisme de correction d'assiette.

Le moteur est soit un moteur à courant continu associé à un système de butées lié à l'axe tournant, soit un moteur pas à pas associé à un système de capteur(s).

Le muret peut présenter un bord supérieur dont le chant est au moins en partie réfléchissant ou rendu réfléchissant par un revêtement réfléchissant, par un dépôt d'une couche d'aluminium par exemple. On peut ainsi ajouter de la lumière en partie supérieure du faisceau si cela est approprié.

L'invention a également pour objet une paire de projecteurs destiné à être montée dans un véhicule, associe à l'avant d'un véhicule deux projecteurs tels que décrits plus hauts, chacun des modules optiques équipant lesdits projecteurs étant apte à émettre un faisceau route à amplitude latérale restreinte, de façon ce que l'écartement entre ces deux faisceaux soit ajustable en fonction de la distance et/ou du nombre de véhicules dans l'environnement proche du véhicule équipé de ladite paire de projecteurs.

Plus particulièrement, l'axe tournant évoqué plus haut comporte un profil global constant, tel qu'un profil de section cylindrique ou de section polygonale, rectangulaire par exemple. Le premier organe de coupure et le muret s'étendent axialement au moins partiellement en périphérie de l'arbre tournant, en étant radialement saillant par rapport à cette dernière. Le premier organe de coupure est apte à limiter en hausse la portée angulaire du faisceau lumineux émis par le module d'éclairage pour l'obtention du faisceau code. Le muret quant à lui ménage une ligne de coupure par l'intermédiaire de son chant, cette ligne de coupure étant apte à limiter la portée latéralement angulaire d'un faisceau route émis par le module optique.

Un tel agencement de l'arbre tournant permet sa réalisation aisée, et facilite ses modalités de montage en mobilité à l'intérieur du boîtier. L'arbre tournant est en positions actives entre au moins deux positions stables, dont l'une correspond à l'émission du faisceau code et dont l'autre correspond à l'émission du faisceau de route d'amplitude latérale restreinte par la tranche /chant médiane du muret. On comprendra par position active une position de l'arbre tournant dans laquelle il influe sur l'émission d'un faisceau lumineux recherché émis par le module optique. Le passage de l'une à l'autre des positions stables dans laquelle l'arbre moteur induit une rupture de faisceau, soit en hausse en position de faisceau code, soit de côté en position de limitation latérale de l'émission d'un faisceau de route, sont simples à obtenir en limitant la rigueur des contraintes de positionnement et de montage de l'arbre tournant à l'intérieur du boîtier. La stabilité de ces positions peut être facilement obtenue au moyen d'un moteur, préférentiellement à courant continu, d'entraînement en rotation de l'arbre tournant. Le maintien de l'arbre tournant dans ses diverses positions stables est facilement réalisé par sa mise en butée dans des positions prédéfinies à l'encontre de son entraînement par le moteur.

L'utilisation d'un moteur à courant continu et de ses moyens de contrôle commande sont de faible coût.

On peut aussi utiliser un moteur pas à pas, plus compliqué qu'un moteur à courant continu, mais permettant plus de flexibilité pour faire passer l'axe tournant d'une position à une autre, ce qui peut s'avérer avantageux, notamment quand le module optique est à au moins trois ou quatre fonctions.

Par ailleurs, au regard des contraintes de sécurité impliquant une mise en position par défaut du module optique en position d'émission d'un faisceau code, un organe de rappel aisément implantable à l'intérieur du boîtier est apte à provoquer spontanément une manoeuvre de l'arbre tournant vers une telle position, notamment à partir d'une modification du pilotage en alimentation électrique du moteur.

A titre indicatif, le passage de la position du faisceau code vers le faisceau de route d'amplitude latérale restreinte correspond à un mouvement angulaire de l'arbre tournant de l'ordre de, par exemple, 100° à 110°. Plus particulièrement, l'écart angulaire d'implantation du premier organe de coupure par rapport à l'implantation du muret est de l'ordre compris entre 100° et 110°, de sorte que l'organisation des moyens de butée visant à maintenir l'arbre tournant dans les positions correspondantes d'exploitation du premier organe de coupure ou du muret soit aisée à réaliser.

A partir d'une combinaison entre des faisceaux lumineux émis par des module optiques respectivement droit et gauche, les tranches latérales médianes des murets que comportent respectivement ces module optiques permet de délimiter entre elle une fenêtre de passage d'un faisceau de route d'amplitude latérale restreinte. Les murets que comportent respectivement les module optiques droit et gauche sont décalés par rapport à l'axe optique du module optique, respectivement vers la droite pour le module optique droit et vers la gauche pour le module optique gauche (en considérant un axe orienté des sources lumineuses vers l'avant des modules optiques).

A partir d'une telle fenêtre ménagée entre les tranches latérales médianes des murets, le faisceau lumineux émis par le module optique peut être exploité en association avec un mécanisme à faisceau tournant et/ou à correction d'assiette du module d'éclairage et/ou du module optique pour un éclairage sélectif de l'environnement du véhicule.

Plus particulièrement, à partir de moyens de commande simples à mettre en oeuvre pour notamment provoquer l'entraînement en rotation de l'arbre tournant vers sa position active correspondante à l'exploitation des tranches des murets, un faisceau route à amplitude latérale restreinte peut être émis par le module optique en vue de permettre un éclairage optimisé d'une zone excluant un espace mouvant dans lequel est localisé un véhicule roulant dont le conducteur ne doit pas être ébloui. Le passage inverse de la position d'émission du faisceau de route d'amplitude latérale restreinte vers la position d'émission du faisceau code est obtenu à partir d'une désactivation de l'organe moteur, et d'une détente de l'organe de rappel préalablement mis sous tension lors de l'entraînement de l'arbre tournant vers la position faisceau de route d'amplitude latérale restreinte.

L'émission du faisceau code correspond à une limitation en hausse de la propagation du faisceau émis par le module optique en correspondance avec la ligne de coupure induite par le premier organe de coupure. En positions respectives de coupure en hausse du faisceau lumineux, la position de l'arrête de sommet du muret correspond préférentiellement à la position de l'arrête de sommet du premier organe de coupure. Les lignes de coupure en hausse de l'un à l'autre du premier organe de coupure et du muret sont en correspondance. L'émission du faisceau route d'amplitude latérale restreinte est en outre limitée en hausse par une ligne de coupure correspondante à la ligne de coupure d'obtention du faisceau code.

Le muret est cependant susceptible de comporter un revêtement réfléchissant à son arrête de sommet, pour accroître la luminosité en hausse du faisceau de route d'amplitude latérale restreinte.

Le passage du faisceau code au faisceau de route à amplitude latérale restreinte (ALR) rend possible une transition « douce » du code à l'ALR. Dans l'autre sens, on privilégie plutôt de passer au plus vite du faisceau ALR au faisceau code, pour des raisons de sécurité. Plus particulièrement, la limitation latérale de l'amplitude du faisceau de route est strictement obtenue dès lors que le muret est en position d'exploitation. Les différentes combinaisons possibles d'éclairage sélectif de la zone à éclairer par le module optique en sont accrues en association avec un mécanisme à faisceau tournant et/ou à correction d'assiette.

A titre d'exemple non limitatif, le premier organe de coupure et le muret étant focalisé sur l'axe optique du module d'éclairage, les dites lignes de coupure en hausse sont d'une hauteur comprise entre 0,5 mm et 0,6 mm, et notamment sont de 0,54 mm, avec une lentille de focale de l'ordre de 43 mm.

L'arbre tournant est manoeuvrable en rotation vers une position correspondante à l'émission d'un deuxième faisceau supplémentaire qui est indifféremment formé d'un faisceau de route ou d'un faisceau lumineux d'autoroute. Dans ce cas, l'arbre tournant est manoeuvrable en rotation entre trois positions stables, l'une médiane correspondante à l'émission du faisceau code et deux autres extrêmes correspondantes pour l'une à l'émission du faisceau de route à amplitude latérale restreinte et pour l'autre soit à une émission d'un faisceau d'autoroute soit et de préférence à l'émission d'un faisceau de route. Le passage de la position d'émission du faisceau code, qui constitue une position de référence en raison du rappel spontané induit par l'organe de rappel, vers la position d'émission du faisceau de route à amplitude latérale restreinte est obtenu en activant le moteur pour entraîner l'axe tournant suivant un premier sens de rotation. Le passage de la position d'émission du faisceau code vers la position d'émission du faisceau d'autoroute ou du faisceau de route est obtenu en activant le moteur pour entraîner l'axe tournant suivant un sens de rotation inverse au précédent.

Plus particulièrement encore et selon une autre variante, préférée, l'arbre tournant est manoeuvrable en une position notamment exempte d'organe de coupure dans laquelle un dit deuxième faisceau lumineux supplémentaire est un faisceau de route. Dans ce cas, il est souhaitable que le module d'éclairage soit monté mobile sur le boîtier entre une position d'émission du faisceau code et une position d'émission d'un faisceau code relevé dans laquelle le module optique est apte à émettre un faisceau d'autoroute.

De préférence, la position de l'arbre tournant correspondante à l'émission du faisceau code est une position intermédiaire entre les positions de l'arbre tournant correspondantes respectivement à l'émission du premier faisceau lumineux supplémentaire et à l'émission du deuxième faisceau lumineux supplémentaire.

De préférence encore, l'entraînement en rotation de l'arbre tournant pour le passage de l'une à l'autre des positions affectées à l'émission de l'un ou l'autre des faisceaux lumineux supplémentaires émis par le module optique est réalisé à partir de la position de référence correspondante à l'émission du faisceau code, et par entraînement en rotation de l'arbre tournant suivant des sens respectifs jusqu'à atteindre la position d'émission du faisceau lumineux supplémentaire correspondant. Ces positions sont des positions stables maintenues à partir d'une mise en butée de l'arbre tournant à l'encontre de son entraînement en rotation par le moteur.

Le passage entre l'une quelconque des positions de l'arbre tournant correspondantes à un faisceau lumineux supplémentaire vers la position correspondante au faisceau code est notamment provoqué par un organe de rappel, notamment élastique tel qu'un ressort de torsion ou analogue, consécutivement à une modification de la commande électrique du moteur.

Le projecteur peut comprendre en outre des moyens de détection de l'environnement du véhicule, et notamment de la présence d'un autre véhicule circulant sur une même voie en étant suivi ou en phase de doublement et/ou circulant sur une voie en sens inverse de circulation. De tels moyens de détection sont par exemple constitués de moyens optoélectroniques, tels qu'une caméra ou analogue, éventuellement associés à des moyens de communication par ondes, tels que des moyens de localisation satellitaire, GPS (Global Positioning System en anglais) ou moyens analogues, des radars, voire encore des moyens de communication par ondes exploitant un réseau de téléphonie cellulaire. Ces moyens peuvent être dans le module optique, dans le projecteur ou montés dans le véhicule dans une zone appropriée (derrière le pare brise ...).

Des moyens de calcul sont préférentiellement associés à de tels moyens de détection, pour parfaire la pertinence des informations fournies par les moyens de détection et pour optimiser la reconnaissance de la zone à éclairer en excluant l'espace occupé par un autre véhicule dont le conducteur ne doit pas être ébloui.

En vue de l'optimisation recherchée de l'éclairage d'une zone excluant un espace mouvant dans lequel est localisé un véhicule roulant dont le conducteur ne doit pas être ébloui, le Module optique comprend en outre des moyens de mobilité du module d'éclairage et/ou du module optique aptes à procurer une fonction à faisceau tournant et/ou une fonction de correction d'assiette, en association avec la mise en oeuvre de l'axe tournant vers l'une ou l'autre de ses positions stables.

Plus particulièrement, l'entraînement en rotation de l'arbre tournant vers l'une quelconque de ses positions d'émission d'un faisceau lumineux dédié est associé à des moyens de détection de l'environnement du véhicule et à un mécanisme à faisceau tournant et/ou à un mécanisme de correction d'assiette.

La présente invention sera mieux comprise à la lecture de la description qui va en être faite d'un exemple de réalisation, en relation avec les figures des planches annexées, dans lesquelles :
- La fig.1 sont des illustrations successives de modalités d'éclairage d'une voie de circulation par un premier véhicule équipé d'un Module optique de la présente invention, prenant en compte la présence d'un second véhicule progressant sur une voie inverse de circulation.
- La fig.2 est un schéma illustrant divers moyens que comprend le Module optique de la présente invention pour obtenir un éclairage sélectif selon les modalités représentées sur la fig.1.
- Les fig.3 à fig.5 sont des illustrations en perspective d'un mécanisme de manoeuvre d'un cache mobile équipant un module optique conforme à un projecteur de la présente invention.
- Les fig.6 et fig.7 sont des illustrations en perspective d'un couple de caches mobiles que comporte un module optique de la présente invention, respectivement affectés à un module optique et à un module optique des projecteurs respectivement droit et gauche équipant le premier véhicule.
- Les fig.8 à fig.10 sont des schémas en coupe longitudinale d'un module optique de la présente invention,
- La fig.11 est un schéma illustrant un flux lumineux émis par un module optique selon la présente invention, dans une position du cache mobile correspondante à une coupure d'amplitude latérale d'un faisceau de route.

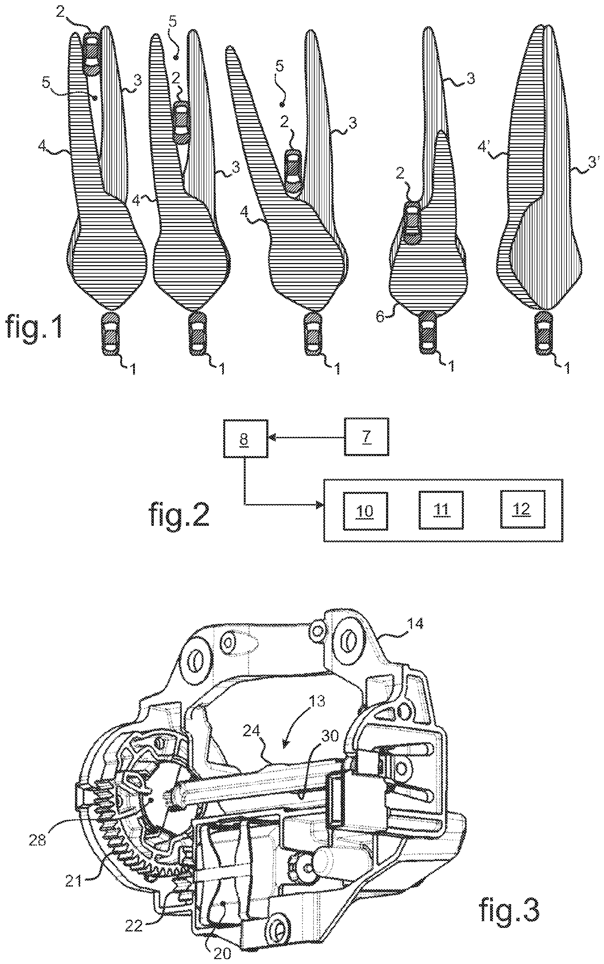

Sur la fig.1, un premier véhicule 1 est en phase de croisement d'un second véhicule 2 progressant sur une voie de circulation en sens inverse. Il est nécessaire de ne pas éblouir le conducteur du second véhicule 2, et de néanmoins chercher à optimiser l'éclairage du milieu environnant le premier véhicule 1. Dans une première phase d'approche, le projecteur du premier véhicule émet des faisceaux de route droit 3 et gauche 4 qui sont restreints en amplitude latérale (faisceaux dits route ALR par soucis de concision dans le reste du texte), pour créer une zone d'ombre 5 dans l'espace occupé par le second véhicule 2, tout en optimisant l'éclairage de la zone environnante. Dans les deux étapes suivantes, l'émission du faisceau de route gauche 4 dont l'amplitude latérale est restreinte est progressivement basculée vers la gauche pour éviter d'éblouir le conducteur du second véhicule 2 en situation d'approche. Selon l'étape suivante, le module optique gauche du premier véhicule 1 émet un faisceau code 6 lorsque le second véhicule 2 arrive à proximité. Dans une étape finale, lorsque le second véhicule 2 s'est éloigné, les module optiques droit et gauche du premier véhicule 1 émettent tous deux des faisceaux de route 3',4' sans restriction d'éclairage latéral. Il ressort de ces dispositions que l'éclairage de la zone environnant le premier véhicule 1 est optimisé, sans provoquer un éblouissement du conducteur du second véhicule 2, d'une part à partir d'une restriction latérale des faisceaux de route émis par l'un au moins des module optiques équipant le premier véhicule 1, et d'autre part à partir du basculement du faisceau lumineux 4 émis par le module optique gauche.

Sur la fig.2, le module optique met en oeuvre des moyens de détection 7, tels que des moyens optoélectroniques ou analogues, qui sont associés à des moyens de calcul 8. Le Module optique met aussi en oeuvre des moyens de commande de fonctions d'éclairage 9 dédiées à l'émission des faisceaux lumineux par les module optiques droit et gauche du premier véhicule 1. Les fonctions d'éclairage associent un dispositif à faisceau tournant 10, un mécanisme 11 de sélection de l'émission d'un faisceau lumineux spécifique, et un mécanisme de correction d'assiette 12, voire encore un mécanisme de relevage des faisceaux de croisement émis par les module optiques. Chacune de ces fonctions d'éclairage 10,11,12 est susceptible d'être mise en oeuvre indépendamment d'un module optique à l'autre équipant le premier véhicule 1, selon des positions respectives souhaitées de caches mobiles que comportent les module optiques droit et gauche du premier véhicule 1.

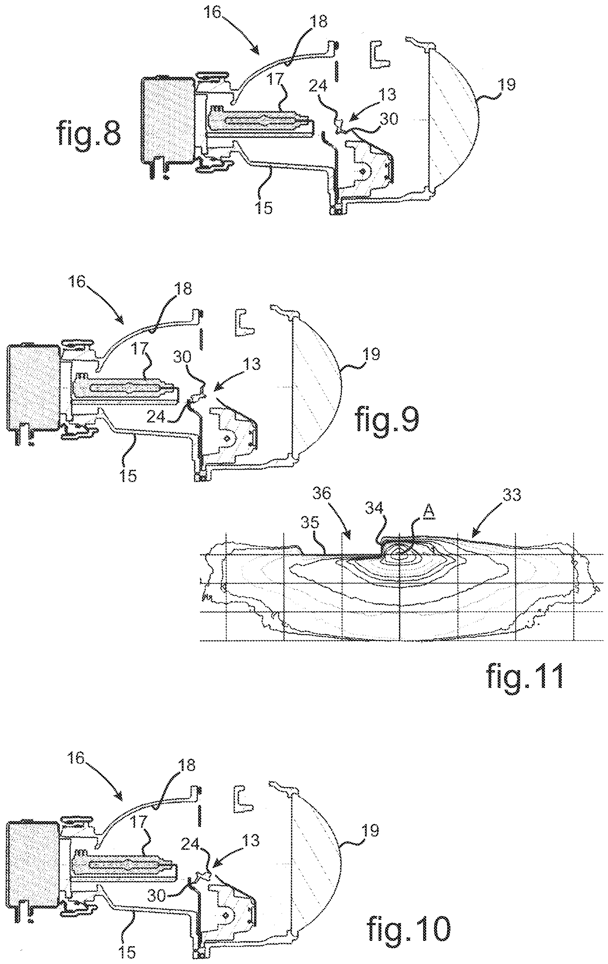

Sur les fig.3 à fig.10, le mécanisme 11 de sélection de l'émission d'un faisceau lumineux spécifique comprend un cache mobile qui est agencé en arbre 13 monté tournant sur un châssis 14 intégré dans un boîtier 15 des module optiques 16. Plus particulièrement sur les fig.8 à fig.10, le boîtier 15 loge un module d'éclairage associant une source lumineuse 17 et un système optique composé d'un réflecteur 18 et d'une lentille 19.

Les figures 8 à 10 représentent les modules optiques qui sont destinés à être intégrés ensuite dans un dispositif d'éclairage ou projecteur.

L'axe tournant 13 est interposé entre la source lumineuse 17 et la lentille 19, pour modifier la portée et/ou l'amplitude latérale du faisceau lumineux émis par le module optique 16.

Plus particulièrement sur les fig.3 à fig.5, l'axe tournant 13 est représenté en position intermédiaire d'émission d'un faisceau code par le module optique 16. L'axe tournant 13 est apte à être entraîné en rotation au moyen d'un moteur 20 préférentiellement à courant continu, par l'intermédiaire d'un mécanisme de transmission associant des roues dentées 21,22. L'axe tournant 13 est automatiquement placé en position d'émission d'un faisceau code 6 par le module optique 16, à partir d'une modification de commande électrique du moteur 20 et d'un entraînement spontané de l'axe tournant 13 au moyen d'un organe élastique de rappel 23, tel qu'un ressort de torsion ou analogue. Plus particulièrement, lorsque l'axe tournant 13 est entraîné par l'organe moteur 20 selon l'un ou l'autre de ses sens de rotation, l'organe élastique de rappel 23 est mis sous contrainte, de sorte que sa libération provoque spontanément la mise en position de l'axe tournant 13 pour l'émission du faisceau code 6 par le module optique 16. L'organe moteur 20 est prévu pour entraîner l'axe tournant 13 suivant l'un et l'autre de ses sens de rotation, vers des positions stables d'émission de faisceaux lumineux supplémentaires, dont un faisceau de route 3' ;4' et un faisceau de route d'amplitude latérale restreinte 3,4. Le maintien de l'axe tournant 13 en chacune de ses positions stables correspondantes à l'émission des différents faisceaux lumineux est obtenu à partir d'un système de butées à l'encontre d'une activation de l'organe moteur 20 pour les positions correspondantes à l'émission des faisceaux lumineux supplémentaires 3,4 ; 3',4' et à l'encontre de l'organe de rappel 23 pour l'émission du faisceau code 6.

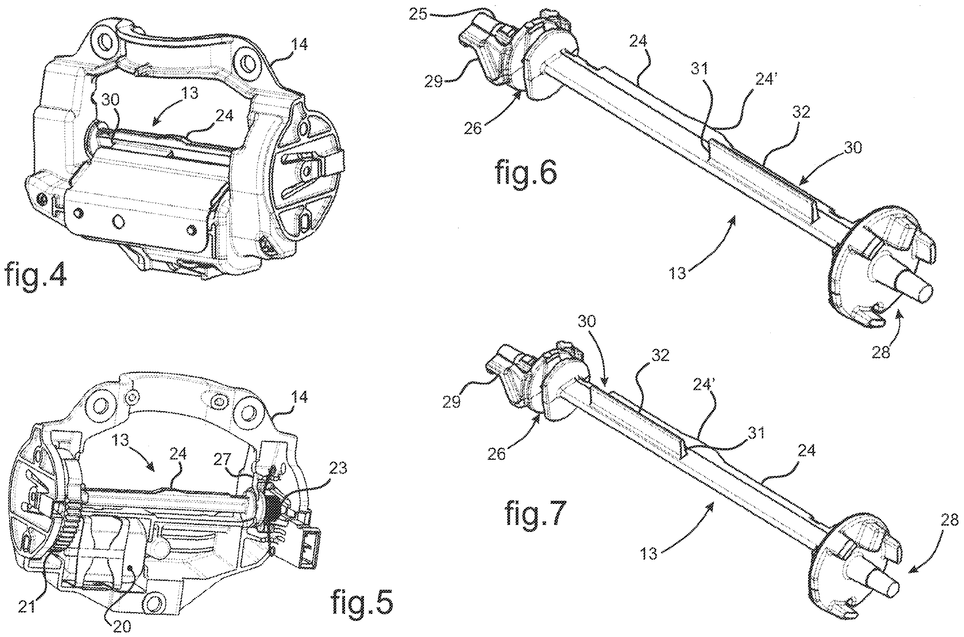

Plus particulièrement sur les fig.6 et fig.7 sont représentés des arbres tournant 13 respectivement affectés à un module optique gauche et à un module optique droit équipant le premier véhicule. Ces arbres tournant 13 présentent un profil global constant de conformation rectangulaire. Chacun de ces arbres tournant 13 comporte un premier organe de coupure 24 qui est agencé en cache à double bord supérieur (pour plus de détails sur ce type de double cache, on pourra se reporter, par exemple, au brevet EP- 1 584 862). Le premier organe de coupure 24 induit une ligne de coupure oblique du faisceau lumineux émis par le module optique 16, pour l'émission du faisceau code 6. Le premier organe de coupure 24 est automatiquement placé en position intermédiaire de focalisation sur l'axe optique du module d'éclairage sous l'effet de l'organe de rappel 23, avec lequel l'axe tournant 13 est en prise. A cet effet, l'une des extrémités des arbres tournant 13 comporte un fût 25 de réception de l'organe de rappel 23 sur lequel il est enfilé. A cette même extrémité est ménagée une gorge 26 le long de laquelle circule des organes de guidage 27 que comporte le châssis 14, tels que visibles sur la fig.5. Un système de butée 28 à deux positions des arbres tournant coopère avec des butées antagonistes que comporte le châssis 14, pour maintenir les arbres tournant 13 dans leurs diverses positions respectives. A l'autre extrémité des arbres tournant 13, un bras 29 permet le pré-positionnement de l'organe de rappel élastique 23.

Par ailleurs, chacun des axes tournants 13 comporte un deuxième organe de coupure 30 agencé en muret, qui est latéralement décalé vers la droite pour l'axe tournant 13 affecté au module optique gauche et vers la gauche pour l'axe tournant 13 affecté au module optique droit. De tels décalages sont à considérer au regard de la position de l'axe optique du module d'éclairage. Ces murets 30 sont de hauteur (sensiblement) constante, en étant angulairement décalés par rapport au premier organe de coupure 24 correspondant, d'un angle de l'ordre compris entre 100° et 110°. Les murets 30 en position active sont aptes à induire à partir de leur tranche latérale 31 la plus proche de l'axe optique du module d'éclairage, une coupure de l'amplitude latérale d'un faisceau de route émis par le module optique. On comprendra par position active du muret 30 sa position correspondante à sa focalisation sur l'axe du module d'éclairage. Cette position active du muret 30 résulte de l'entraînement de l'axe tournant 13 dans le sens de rotation correspondant. En position active de coupure latérale du faisceau de route, la position de l'arrête de sommet 32 du muret 30 correspond à la position de l'arrête de sommet 24' du premier organe de coupure 24. Le muret 30 induit non seulement une coupure latérale d'amplitude du faisceau de route 3,4, mais aussi une coupure en hausse correspondante à une coupure d'émission d'un faisceau code 6. A titre indicatif, le premier organe de coupure 24 et le muret 30 étant focalisés sur l'axe du module d'éclairage, les lignes de coupure en hausse sont de l'ordre de 0,54 mm.

Sur la fig.8, l'axe tournant 13 est en position spontanée d'émission d'un faisceau code 6. L'organe moteur 20 est désactivé et l'organe de rappel 23 provoque le passage de l'axe tournant 13 d'une quelconque autre position d'un faisceau lumineux supplémentaire 3,4 ; 3',4' émis par le module optique 16 vers sa position intermédiaire correspondante à l'émission d'un faisceau code 6. Dans cette position, le premier organe de coupure 24 est maintenu de manière stable par l'organe élastique de rappel 23. Le premier organe de coupure 24 est actif, et la portée du faisceau lumineux émis par le module optique 16 est limitée en hausse par l'arrête de sommet 24' du premier organe de coupure 24 pour l'émission d'un faisceau code 6.

Sur la fig.9, l'axe tournant 13 est manoeuvré en rotation suivant un premier sens jusqu'à son immobilisation et son maintien en stabilité en appui contre un premier organe de butée. Cette manoeuvre en rotation place le muret 30 en position active de restriction de l'amplitude latérale d'un faisceau de route 3,4 émis par le module optique 16, et en position de coupure en hausse dans cette zone de coupure latérale. Sur la fig.11, le faisceau lumineux 33 émis par un module optique droit correspond à un faisceau de route d'amplitude restreinte 3,4, tant latéralement 34 par l'intermédiaire de la tranche 31 du muret 30 la plus proche de l'axe optique A du module d'éclairage, qu'en hausse 35 dans cette même zone 36 de coupure d'amplitude verticale 34 du faisceau de route. La zone à éclairer environnant le premier véhicule 1 est optimisée, en restreignant l'émission de lumière vers un espace 5 dans lequel est détecté la présence du second véhicule 2. A partir d'une variation d'inclinaison du module d'éclairage ou du module optique par l'intermédiaire des fonctions virage tournant 10 et/ou de correction d'assiette 12, cet espace 5 préservé d'éclairage peut évoluer en fonction de l'évolution du second véhicule 2 dont le conducteur ne doit pas être ébloui.

Sur la fig.10, l'axe tournant 13 est manoeuvré suivant un sens de rotation inverse au précédent, jusqu'à son immobilisation et son maintien en stabilité en appui contre un second organe de butée. En l'absence de détection d'un second véhicule 2, cette manoeuvre en rotation place l'axe tournant 13 de manière à dégager le faisceau lumineux émis par le module optique 16, pour optimiser l'éclairage de l'environnement du premier véhicule 1 par l'émission d'un faisceau de route 3',4'.

## Revendications

1. Projecteur pour véhicule automobile, ce projecteur comprenant au moins un module optique (16) apte à émettre plusieurs faisceaux lumineux, dont un faisceau code (6) et au moins un faisceau lumineux supplémentaire (3,4) qui forme un faisceau de route à amplitude latérale restreinte, le module optique étant logé à l'intérieur d'un boîtier du projecteur et associant une source lumineuse (17) et un système optique (18,19), le module optique étant équipé d'un cache mobile entre au moins deux positions, le projecteur étant **caractérisé en ce que** ce cache mobile est agencé selon un axe (13) monté tournant dans le module optique (16) et entraîné en rotation au moins par un moteur (20), ledit cache comportant plusieurs profils de coupure de faisceau lumineux émis par ledit module (16), l'axe (13) comportant au moins un premier organe de coupure (24) agencé en cache à double bord permettant d'obtenir une coupure oblique pour l'émission du faisceau code (6), et au moins un deuxième organe de coupure agencé en muret (30) de hauteur sensiblement constante, angulairement décalé par rapport au premier organe de coupure (24), le muret (30) étant un organe de coupure dont le bord sensiblement vertical (31) permet l'obtention d' une ligne de coupure sensiblement verticale (34) pour l'émission du faisceau de route à amplitude latérale restreinte (3,4).

2. Projecteur selon la revendication 1, **caractérisé en ce qu'**en positions respectives de coupure, les parties supérieures des organes de coupure (24,30) de l'axe (13) sont sensiblement positionnés à la même hauteur.

3. Projecteur selon la revendication 1, **caractérisé en ce qu'**en positions respectives de coupure, les parties supérieures des organes de coupure (24,30) de l'axe (13) sont positionnés à des hauteurs différentes.

4. Projecteur selon l'une des revendications 2 ou 3, **caractérisé en ce que** le positionnement relatif des organes de coupure (24,30) en positions respectives de coupure est ajusté par la sélection de la hauteur du muret (30) et/ou à l'aide du système de correction équipant le module optique (16).

5. Projecteur selon l'une des revendications précédentes, **caractérisé en ce que** le muret (30), étant notamment focalisé sensiblement sur l'axe optique du module d'éclairage (16), la coupure (35) correspondant au bord supérieur dudit muret (30) est d'une hauteur d'au moins 0,5 mm ou d'au moins 0,6 mm, notamment d'au moins 0,54 mm.

6. Projecteur selon l'une des revendications précédentes, **caractérisé en ce que** l'axe tournant (13) est manoeuvrable en rotation vers une position correspondante à l'émission d'un deuxième faisceau supplémentaire qui est soit un faisceau de route (3',4'), soit un faisceau d'autoroute.

7. Projecteur selon la revendication précédente, **caractérisé en ce que** la position de l'axe tournant (13) correspondante à l'émission du faisceau code (6) est une position intermédiaire entre les positions de l'axe tournant (13) correspondantes respectivement à l'émission du premier faisceau lumineux supplémentaire (3,4) et à l'émission du deuxième faisceau lumineux supplémentaire (3',4').

8. Projecteur selon l'une des revendications précédentes, **caractérisé en ce que** l'entraînement en rotation de l'axe tournant (13) pour le passage de l'une à l'autre des positions affectées à l'émission de l'un ou l'autre des faisceaux lumineux supplémentaires (3,4 ;3',4') est réalisé à partir de la position de référence correspondante à l'émission du faisceau code (6), et par entraînement en rotation de l'axe tournant (13) suivant des sens respectifs jusqu'à atteindre la position d'émission du faisceau lumineux supplémentaire correspondant, ces positions étant des positions stables maintenues à partir d'une mise en butée de l'arbre tournant (13) à l'encontre de son entraînement en rotation par le moteur (20).

9. Projecteur selon l'une des revendications précédentes, **caractérisé en ce que** le passage entre l'une quelconque des positions de l'arbre tournant (13) correspondantes à un faisceau lumineux supplémentaire (3,4 ;3',4') vers la position correspondante au faisceau code (6) est provoqué par un organe élastique de rappel (23), notamment consécutivement à une modification du pilotage de la commande électrique du moteur (20).

10. Projecteur selon l'une des revendications précédentes, **caractérisé en ce que** le muret (30) présente un bord supérieur dont le chant est au moins en partie réfléchissant ou rendu réfléchissant par un revêtement réfléchissant.

11. Projecteur selon l'une des revendications précédentes, **caractérisé en ce que** le module optique (16) est un module tri-fonction, avec un axe tournant (13) muni de trois organes de coupure, afin d'émettre selon la position de l'arbre tournant un faisceau code, un faisceau route ou autoroute, et un faisceau route à amplitude latérale restreinte.

12. Projecteur selon l'une des revendications 1 à 10, **caractérisé en ce que** le module optique (16) est un module quadri-fonction, avec un axe tournant (13) muni de quatre organes de coupure, afin d'émettre selon la position de l'arbre (13), un faisceau code, un faisceau route, un faisceau route à amplitude latérale restreinte et un faisceau autoroute.

## Patentansprüche

1. Kraftfahrzeugscheinwerfer, der wenigstens ein Optikmodul (16) umfasst, das mehrere Lichtbündel auszustrahlen vermag, darunter ein Abblendlichtbündel (6) und wenigstens ein Zusatzlichtbündel (3, 4), das ein Fernlichtbündel mit seitlich begrenzter Breite bildet, wobei das Optikmodul innen in einem Gehäuse des Scheinwerfers aufgenommen ist und eine Lichtquelle (17) und ein optisches System (18, 19) in Beziehung setzt, wobei das Optikmodul mit einer Blende ausgestattet ist, die zwischen wenigstens zwei Positionen beweglich ist, wobei der Scheinwerfer **dadurch gekennzeichnet ist, dass** die bewegliche Blende längs einer Achse (13) angeordnet ist, die in dem Optikmodul (16) schwenkbar gelagert ist und durch wenigstens einen Motor (20) in Drehung versetzt wird, wobei die Blende mehrere Profile zur Hell-Dunkel-Begrenzung des von dem Modul (16) emittierten Lichtbündels umfasst, wobei die Schwenkachse (13) wenigstens ein erstes Lichtbegrenzungsorgan (24) umfasst, das als Blende mit doppeltem Rand ausgebildet ist, die es erlaubt, eine schräge Hell-Dunkel-Grenze für die Emission des Abblendlichtbündels (6) zu erhalten, sowie wenigstens ein zweites Lichtbegrenzungsorgan, das als Wand (30) mit einer im Wesentlichen konstanten Höhe ausgebildet ist, die bezüglich des ersten Lichtbegrenzungsorgans (24) winkelmäßig versetzt ist, wobei die Wand (30) ein Lichtbegrenzungsorgan ist, dessen im Wesentlichen senkrechter Rand (31) es erlaubt, eine im Wesentlichen senkrechte Hell-Dunkel-Begrenzungslinie (34) für die Emission des Fernlichtbündels (3, 4) mit seitlich begrenzter Breite zu erhalten.

2. Scheinwerfer nach Anspruch 1,
**dadurch gekennzeichnet, dass** in den jeweiligen Lichtbegrenzungsstellungen die oberen Teile der Lichtbegrenzungsorgane (24, 30) der Schwenkachse (13) im Wesentlichen in derselben Höhe platziert sind.

3. Scheinwerfer nach Anspruch 1,
**dadurch gekennzeichnet, dass** in den jeweiligen Lichtbegrenzungsstellungen die oberen Teile der Begrenzungsorgane (24, 30) der Schwenkachse (13) in unterschiedlichen Höhen platziert sind.

4. Scheinwerfer nach einem der Ansprüche 2 oder 3,
**dadurch gekennzeichnet, dass** die relative Positionierung der Lichtbegrenzungsorgane (24, 30) in den jeweiligen Lichtbegrenzungsstellungen durch die Wahl der Höhe der Wand (30) und/oder mittels des Regelungssystems, mit dem das Optikmodul (16) ausgestattet ist, angepasst wird.

5. Scheinwerfer nach einem der vorhergehenden Ansprüche,
**dadurch gekennzeichnet, dass** der der Hell-Dunkel-Grenze (35) entsprechende obere Rand der Wand (30), die insbesondere im Wesentlichen auf die optische Achse der Beleuchtungseinheit (16) fokussiert ist, eine Höhe von wenigstens 0,5 mm oder wenigstens 0,6 mm, insbesondere wenigstens 0,54 mm hat.

6. Scheinwerfer nach einem der vorhergehenden Ansprüche,
**dadurch gekennzeichnet, dass** die Schwenkachse (13) in eine Position drehbar ist, die der Emission eines zweiten Zusatzlichtbündels entspricht, das entweder ein Fernlichtbündel (3', 4') oder ein Autobahnlichtbündel ist.

7. Scheinwerfer nach dem vorhergehenden Anspruch,
**dadurch gekennzeichnet, dass** die der Emission des Abblendlichtbündels (6) entsprechende Stellung der Schwenkachse (13) eine Zwischenstellung zwischen den Positionen der Schwenkachse (13) ist, die der Emission des ersten Zusatzlichtbündels (3, 4) bzw. der Emission des zweiten Zusatzlichtbündels (3', 4') entsprechen.

8. Scheinwerfer nach einem der vorhergehenden Ansprüche,
**dadurch gekennzeichnet, dass** das Drehen der Schwenkachse (13) zum Wechseln von der einen in die andere Position, die der Emission des einen oder des anderen Zusatzlichtbündels (3, 4; 3', 4') zugeordnet ist, aus der der Emission des Abblendlichtbündels (6) entsprechenden Referenzposition durch Drehen der Schwenkachse (13) in die jeweilige Richtung bis zum Erreichen der Position zur Emission des entsprechenden Zusatzlichtbündels erfolgt, wobei es sich bei diesen Positionen um stabile Positionen handelt, die durch ein Inanschlagbringen der Schwenkachse (13) gegenläufig zu ihrer Drehung durch den Motor (20) gehalten werden.

9. Scheinwerfer nach einem der vorhergehenden Ansprüche,
**dadurch gekennzeichnet, dass** der Wechsel zwischen jeglicher einem Zusatzlichtbündel entsprechenden Position der Schwenkachse (13) und der dem Abblendlichtbündel (6) entsprechenden Position durch ein elastisches Rückstellorgan (23) bewirkt wird, insbesondere infolge einer Änderung der elektrischen Ansteuerung des Motors (20).

10. Scheinwerfer nach einem der vorhergehenden Ansprüche,
**dadurch gekennzeichnet, dass** die Wand (30) einen oberen Rand aufweist, dessen Kante wenigstens zum Teil reflektierend ist oder durch eine reflektierende Beschichtung reflektierend gemacht wird.

11. Scheinwerfer nach einem der vorhergehenden Ansprüche,
**dadurch gekennzeichnet, dass** das Optikmodul (16) ein Dreifunktionsmodul ist mit einer Schwenkachse (13), die mit drei Lichtbegrenzungsorganen versehen ist, um je nach Stellung der Schwenkachse ein Abblendlicht, ein Fernlicht oder Autobahnlicht und ein Fernlicht mit seitlich begrenzter Breite zu emittieren.

12. Scheinwerfer nach einem der Ansprüche 1 bis 10,
**dadurch gekennzeichnet, dass** das Optikmodul (16) ein Vierfunktionsmodul ist mit einer Schwenkachse (13), die mit vier Lichtbegrenzungsorganen versehen ist, um je nach Stellung der Achse (13) ein Abblendlicht, ein Fernlicht, ein Fernlicht mit seitlich begrenzter Breite und ein Autobahnlicht zu emittieren.

## Claims

1. Headlamp for an automotive vehicle, this headlamp comprising at least one optical module (16) that is capable of emitting multiple light beams, one of which is a low beam (6) and at least one of which is an additional light beam (3, 4) that forms a high beam with restricted lateral amplitude, the optical module being housed within a housing of the headlamp and combining a light source (17) and an optical system (18, 19), the optical module being provided with a shield that is movable between at least two positions, the headlamp being **characterized in that** the movable shield is arranged along an axis (13) that is rotatably mounted in the optical module (16) and is rotated by at least one motor (20), said shield including multiple beam cut-off profiles for the light beams emitted by said module (16), the axis (13) including at least one first cut-off member (24) that is arranged with a double-edged shield making it possible to obtain an oblique cut-off for the emission of the low beam (6), and at least one second cut-off member that is arranged as a low wall (30) of substantially constant height, which is angularly offset with respect to the first cut-off member (24), the low wall (30) being a cut-off member, the substantially vertical edge (31) of which makes it possible to obtain a substantially vertical cut-off line (34) for the emission of the high beam with restricted lateral amplitude (3, 4).

2. Headlamp according to Claim 1, **characterized in that**, in the respective cut-off positions, the upper portions of the cut-off members (24, 30) of the axis (13) are substantially positioned at the same height.

3. Headlamp according to Claim 1, **characterized in that**, in the respective cut-off positions, the upper portions of the cut-off members (24, 30) of the axis (13) are positioned at different heights.

4. Headlamp according to either of Claims 2 and 3, **characterized in that** the relative positioning of the cut-off members (24, 30) in the respective cut-off positions is adjusted by selecting the height of the low wall (30) and/or using the correction system with which the optical module (16) is provided.

5. Headlamp according to one of the preceding claims, **characterized in that** since the low wall (30) is in particular focused substantially on the optical axis of the lighting module (16), the cut-off (35) corresponding to the upper edge of said low wall (30) is at least 0.5 mm or at least 0.6 mm, in particular at least 0.54 mm in height.

6. Headlamp according to one of the preceding claims, **characterized in that** the rotary axis (13) can be rotated to a position corresponding to the emission of a second additional beam that is either a high beam (3', 4') or a motorway beam.

7. Headlamp according to the preceding claim, **characterized in that** the position of the rotary axis (13) corresponding to the emission of the low beam (6) is a position that is intermediate between the positions of the rotary axis (13) that correspond to the emission of the first additional light beam (3, 4) and to the emission of the second additional light beam (3', 4'), respectively.

8. Headlamp according to one of the preceding claims, **characterized in that** the rotation of the rotary axis (13) for the transition from one to the other of the positions assigned to the emission of one or the other of the additional light beams (3, 4; 3', 4') is carried out from the reference position corresponding to the emission of the low beam (6), and by rotating the rotary axis (13) in respective directions until reaching the position of emission of the corresponding additional light beam, these positions being stable positions held by means of an end stop acting on the rotary shaft (13) in opposition to its rotation by the motor (20).

9. Headlamp according to one of the preceding claims, **characterized in that** the transition between any one of the positions of the rotary shaft (13) that correspond to an additional light beam (3, 4; 3', 4') to the position corresponding to the low beam (6) is driven by an elastic return member (23), in particular as the result of a modification to the driver of the electrical control of the motor (20).

10. Headlamp according to one of the preceding claims, **characterized in that** the low wall (30) has an upper edge, the edge face of which is at least partly reflective or made reflective by a reflective coating.

11. Headlamp according to one of the preceding claims, **characterized in that** the optical module (16) is a three-function module, with a rotary axis (13) provided with three cut-off members in order to emit, depending on the position of the rotary shaft, a low beam, a high or motorway beam, and a high beam with restricted lateral amplitude.

12. Headlamp according to one of Claims 1 to 10, **characterized in that** the optical module (16) is a four-function module, with a rotary axis (13) provided with four cut-off members in order to emit, depending on the position of the shaft (13), a low beam, a high beam, a high beam with restricted lateral amplitude and a motorway beam.
